# FASCICULE DE BREVET EUROPEEN

(11) **EP 1 965 340 B1**
(45) Date de publication et mention de la délivrance du brevet: **04.05.2011**
(21) Numéro de dépôt: 08151948.0
(22) Date de dépôt: 26.02.2008
(51) Int. Cl.: G06K 19/07

(54) **Contrôleur d'énergie reçue par une antenne pour éviter la corruption des données lors d'une opération écriture dans une mémoire non-volatile d'un transpondeur**
Überprüfer von Energie, die über eine Antenne empfangen wird, um die Datenkorruption beim Schreiben in einen nichtflüchtigen Speicher eines Transponders zu vermeiden
Controller of the energy received by an antenna for preventing corruption of data during a write operation in non-volatile memory of a transponder

(30) Priorité: 27.02.2007 EP 07103163
(43) Date de publication de la demande: 03.09.2008
(73) Titulaire: EM Microelectronic-Marin SA, 2074 Marin (CH)
(72) Inventeur: Lamothe, M. Christian, 2105 Travers (CH)
(74) Mandataire: Couillard, Yann Luc Raymond

(56) Documents cités:
- EP-A1- 1 434 167
- EP-A2- 0 583 690
- US-A- 6 070 804

## Description

### DOMAINE TECHNIQUE

La présente invention concerne de manière générale un émetteur récepteur portatif de petites dimensions, appelé encore circuit transpondeur ou circuit intégré sans contact ou encore étiquette électronique sans contact ou "RFID tag" selon la terminologie anglaise, ce circuit transpondeur utilisant une liaison radiofréquence pour recevoir au moins une partie de son énergie de fonctionnement et pour communiquer avec un autre émetteur-récepteur généralement plus volumineux, appelé encore lecteur ou station de base, cette station de base ayant plus d'énergie à disposition.

Pour fonctionner le circuit transpondeur peut, selon les modes de fonctionnement prévus, ne recevoir son énergie que du champ électromagnétique ambiant rayonné par la station de base ou encore utiliser en partie l'énergie reçue par radiofréquence et en partie de l'énergie stockée ou produite à l'intérieur du circuit transpondeur. Ce champ électromagnétique sert également à l'échange des données entre le circuit transpondeur et la station de base. Certaines données reçues par le circuit transpondeur doivent être stockées dans une unité de mémorisation non-volatile du circuit transpondeur.

A cet effet, l'invention concerne plus particulièrement un circuit transpondeur adapté pour permettre un accès fiable en écriture à son unité de mémorisation non-volatile.

### ARRIERE-PLAN TECHNOLOGIQUE

Il est connu dans l'art antérieur des circuits intégrés comprenant des dispositifs pour assurer une écriture fiable dans des mémoires non-volatile. En particulier, il est connu du document US 5'943'263, l'utilisation d'une mémoire non-volatile reprogrammable dotée d'un circuit de contrôle du niveau de la tension de programmation qui alimente la mémoire dans le but d'empêcher l'écriture en mémoire de données corrompues si cette tension de programmation était insuffisante. Une telle solution basée sur le contrôle de la tension d'alimentation ne convient pas dans le domaine RFID, c'est-à-dire des transmissions de l'information et de l'énergie par radiofréquences. En effet, dans le cas d'un circuit transpondeur, ce n'est pas la tension qui alimente la mémoire non-volatile qui est significative de la possibilité d'effectuer une opération d'écriture fiable mais l'énergie reçue par l'antenne réceptrice du circuit transpondeur.

Il est connu du document US 5'925'139, un circuit de contrôle de la haute tension obtenue par le circuit élévateur de tension, haute tension nécessaire pour réaliser une opération d'écriture fiable dans une mémoire non-volatile. Ce document décrit ici un circuit contrôlant une tension nécessaire en interne de la mémoire et non pas sur l'énergie à disposition reçue par une antenne pour assurer une alimentation suffisante en énergie de la mémoire que l'on veut écrire. Ce document présente l'inconvénient de devoir enclencher le circuit élévateur pour effectuer un contrôle préalable à l'opération d'écriture, ce contrôle peut être faussé en raison de l'énergie préalablement stocké, ce qui est non souhaitable dans le cas d'un circuit transpondeur où l'énergie disponible est limitée directement par l'énergie reçue.

Il est également connu du document US 6'166'960 un dispositif de prévention d'opération d'écriture de données corrompues dans une mémoire non-volatile dans le cas où la tension d'alimentation serait insuffisante. Pour cela, l'élévateur de tension est enclenché en étant éventuellement connecté à une charge représentant le plan mémoire, et si la haute tension générée par cet élévateur de tension est insuffisante alors l'opération d'écriture dans la mémoire ne sera pas autorisée. Pour les mêmes raisons que celles évoquées précédemment, le montage décrit dans ce document ne convient pas à une application du type circuit transpondeur.

Les différentes solutions existantes proposées dans l'art antérieur reposent sur deux principes, l'un consistant à mesurer la valeur de la tension d'alimentation et l'autre consistant à enclencher l'élévateur de tension nécessaire au fonctionnement de la mémoire, en particulier pour les opérations d'écriture dans cette dernière, et à mesurer la tension fournie à la sortie de cet élévateur de tension.

Une telle solution est décrite dans le document EP 0 583 690 A2.

Toutefois, aucune de ces deux solutions n'est applicable pour un circuit transpondeur car dans un cas, la mesure de la tension d'alimentation n'est pas significative de l'énergie à disposition dans le circuit transpondeur et dans l'autre cas, la durée d'évaluation devrait durer aussi longtemps qu'un cycle réel pour une opération d'écriture et prendre en compte l'énergie éventuellement déjà stockée.

C'est pourquoi une toute autre approche doit être développée pour résoudre le problème posé. Il s'agit de pouvoir stocker des données en mémoire non-volatile sans corruption de l'information. Toute opération d'effacement ou d'écriture en mémoire demande une certaine quantité d'énergie. Dans le cas d'un circuit transpondeur, en raison d'une capacité limitée de stockage de l'énergie, voire d'aucune capacité de stockage disponible, l'énergie doit essentiellement provenir de la liaison radiofréquence qui a une valeur aléatoire, En effet, les périodes de communication entre le circuit transpondeur et la station de base sont entrecoupées de périodes de repos pendant lesquelles le champ électromagnétique est absent. Naturellement comme la distance de communication peut être variable entre le circuit transpondeur et la station de base, par voie de conséquence l'énergie reçue par le circuit transpondeur est également variable. De plus, la quantité d'énergie transmise par la station de base et reçue par le circuit transpondeur dépend en outre de la position réciproque des antennes d'émission et de réception. On notera que la faible capacité de stockage de l'énergie pouvant être présente dans le circuit transpondeur est prévue seulement pour absorber les pics de consommation apparaissant à certains moments particuliers lors d'une opération d'écriture en mémoire.

On sait par ailleurs qu'une opération d'écriture commencée ne doit pas être interrompue avant la fin sans mettre en danger l'intégrité de l'information à mémoriser. Dans le cas d'un circuit transpondeur, le risque potentiel d'interrompre une opération d'écriture en cours est le manque d'énergie à disposition pour mener cette opération normalement à terme. Il est donc primordial de savoir à l'avance, c'est-à-dire avant de commencer une opération d'écriture, si l'on disposera de l'énergie suffisante pour mener à bien une telle opération.

On notera encore que pour résoudre les problèmes liés à l'application à un circuit transpondeur, certaines contraintes limitent d'autant les solutions possibles applicables, parmi lesquelles ;

Premièrement il n'est pas possible d'accumuler de l'énergie en réserve pour assurer l'accomplissement total d'une opération d'écriture. En effet, le circuit transpondeur peut être pourvu d'une batterie, i.e. dans le cas d'un circuit transpondeur dit "actif", mais celle-ci peut être à plat ou simplement absente, i.e. dans le cas d'un circuit transpondeur dit "passif", et de toutes les manières il n'est pas économique au point de vue encombrement et prix des composants de rajouter un condensateur supplémentaire dans le montage final pour stocker l'énergie requise. En effet, l'utilisation d'un minimum de composants externes au circuit transpondeur est un des buts constamment recherchés pour ce type d'application.

Deuxièmement, le niveau de tension sur l'alimentation redressée et filtrée provenant du champ électromagnétique reçu par l'antenne n'est pas significatif de l'énergie à disposition pour accomplir une opération d'écriture complète. En effet, la charge est stockée dans un condensateur de filtrage dont la valeur est trop faible pour stocker suffisamment d'énergie. De plus la tension provenant de l'antenne est limitée par un dispositif protecteur contre les surtensions qui délivre une tension pratiquement identique pour une grande plage d'énergie reçue qu'elle soit suffisante ou non pour une opération d'écriture en mémoire. Ainsi, même pour une énergie reçue trop faible, le dispositif protecteur ou limiteur d'antenne entre en action et fournit une tension écrêtée à une valeur pratiquement constante.

### RESUME DE L'INVENTION

Le but de la présente invention est de répondre aux inconvénients mentionnés ci-dessus en fournissant un circuit transpondeur pour lequel il est possible de réaliser de manière fiable des opérations d'écriture dans sa mémoire non-volatile. En résumé, il s'agit donc d'écrire une mémoire de type non-volatile dans un circuit transpondeur utilisant l'énergie reçue par une antenne et ne disposant pas de capacité suffisante de stockage de cette énergie. Comme l'énergie est reçue en quantité variable avec la distance à l'émetteur ou station de base, il est nécessaire de vérifier avant d'entreprendre une opération d'écriture si cette énergie sera en quantité suffisante pour le bon déroulement de cette opération. L'invention en question ce propose de résoudre ce problème pour de tels circuits transpondeur.

A cet effet la présente invention concerne un circuit transpondeur comprenant une antenne pour recevoir des signaux radiofréquences et une unité d'extraction pour en extraire au moins une partie de l'énergie nécessaire au circuit transpondeur, une unité mémoire non-volatile, une unité logique de commande du circuit qui active une unité d'évaluation de l'énergie reçue lors de la réception d'une opération d'écriture par les signaux radiofréquences, caractérisé en ce que l'unité d'évaluation est agencée directement au niveau de l'antenne de manière à fournir à l'unité logique de commande un signal représentatif du statut de l'énergie disponible au niveau de l'antenne indiquant si l'énergie disponible est supérieure à un niveau d'énergie minimum pour assurer une opération d'écriture correcte ou si l'énergie disponible est inférieure au niveau d'énergie minimum pour assurer une opération d'écriture correcte, l'unité logique de commande étant agencée pour effectuer, ou respectivement ne pas effectuer, ladite opération d'écriture.

En résumé, l'invention consiste dans l'utilisation d'un bloc qui évalue l'énergie reçue au niveau de l'antenne. Ce bloc appelé unité d'évaluation évalue l'énergie reçue au niveau de l'antenne ce qui permet de faire abstraction de l'énergie stockée dans des condensateurs ou produite par une batterie du circuit transpondeur car cela fausserait l'estimation de l'énergie réellement à disposition.

De plus, de par la constitution du circuit, on sait que, si on évalue l'énergie à disposition pendant une période préliminaire de durée réduite, cela suffira pour assurer une opération d'écriture complète en toute sécurité, En effet, l'évolution du niveau d'énergie reçue reste faible pendant le déroulement d'une telle opération complète d'écriture,

Selon un mode de réalisation avantageux de l'invention, le circuit transpondeur comprend en outre une unité de surveillance de la tension d'alimentation du circuit transpondeur et des moyens d'interruption de l'unité d'évaluation qui sont activés lorsque la tension d'alimentation du circuit transpondeur est inférieure à un seuil prédéterminé de fonctionnement du circuit transpondeur.

Ainsi selon ce mode de réalisation avantageux, l'invention consiste dans l'utilisation conjointe, d'une part d'un bloc qui évalue l'énergie reçue au niveau de l'antenne et, d'autre part d'un bloc qui surveille le niveau de tension sur l'alimentation du circuit. Ce bloc appelé aussi unité de surveillance surveille le niveau de tension sur l'alimentation générale du circuit transpondeur ce qui permet d'interrompre prématurément toute évaluation de l'énergie reçue. Ce cas se présente en particulier quand le niveau d'énergie reçu est trop faible. En effet l'énergie écoulée pour l'évaluation ferait défaut pour le maintien à un niveau suffisant de la tension d'alimentation générale. Ce qui conduirait à un mauvais fonctionnement du circuit transpondeur par manque de tension d'alimentation. Un arrêt prématuré de l'évaluation de l'énergie permet de remettre à disposition l'énergie reçue pour régénérer la tension de l'alimentation générale.

Selon un mode de réalisation avantageux de l'invention, le/les niveaux d'énergie minimum pour assurer une opération d'écriture correcte est/sont stockés à l'avance dans le circuit transpondeur. Pour cela, l'approche consiste à mesurer à l'avance, par exemple au cours du test ou de la caractérisation du circuit transpondeur, la véritable consommation de la mémoire et d'en déduire la/les valeurs d'énergie qui devra/devront être à disposition pour écrire correctement cette mémoire, énergie qui sera reçue par l'antenne réceptrice du circuit transpondeur. L'approche consiste ensuite à stocker la/les valeurs de l'énergie nécessaire dans le circuit transpondeur pour pouvoir la/les réutiliser comme niveaux d'énergie minimum pendant les opérations d'évaluation de l'énergie reçue.

On remarque que la solution choisie va à l'encontre d'un préjugé commun qui consiste à croire qu'il faut nécessairement enclencher l'élévateur de tension pour connaître la véritable consommation de la mémoire. En fait cette approche n'est seulement qu'une approximation de la consommation réelle du plan mémoire, car l'élévateur de tension n'utilise qu'un modèle du plan mémoire qui est généralement représenté par une charge résistive à laquelle parfois y est ajoutée une charge capacitive.

En outre la solution choisie permet avantageusement de contrôler différentes valeurs d'énergie reçue selon les modes de travail du circuit transpondeur mais aussi de modes différents d'écriture en mémoire, sachant également que plusieurs tailles de plans de mémoire peuvent être envisagés. En effet, il est intéressant de pouvoir gérer plusieurs modes d'écriture qui nécessitent chacun des niveaux différents d'énergie minimum pour assurer une opération correcte d'écriture. De plus selon les variations naturelles du procédé de fabrication et son amélioration au cours du temps, il est à prévoir que pour une dimension de mémoire donnée, l'énergie nécessaire à une opération d'écriture donnée variera. Il est également préférable de se laisser la possibilité qu'un même dispositif de contrôle puisse servir pour des mémoires de dimensions différentes, de la sorte la solution proposée pourra s'appliquer à différents circuits transpondeurs.

Additionnellement, il est aussi avantageusement que la distance maximum entre le circuit transpondeur et la station de base qui permette une écriture des données en mémoire, soit relativement indépendante de la température et des variations technologiques naturelles lors de la fabrication des circuits transpondeurs. A cet effet, il faudra préférablement adapter cette distance maximum pour des mémoires parmi les moins performantes encore acceptables, ce qui permet de fournir à l'utilisateur des circuits transpondeurs fonctionnant toujours de la même manière malgré les variations naturelles de la fabrication. Ceci permet d'assurer des conditionnements de fonctionnement sensiblement identiques quelle que soit la qualité des circuits transpondeurs initialement utilisés pour mettre au point l'application.

Pour cela, on notera avantageusement que la solution préconisée offre la possibilité d'homogénéiser la distance d'écriture pour une production donnée de mémoires même si certaines mémoires pourraient être écrites avec moins d'énergie. En effet pour un type de station de base donnée, le niveau d'énergie minimum nécessaire correspond à une distance donnée par rapport à l'antenne d'émission. Le circuit transpondeur qui contient la mémoire non-volatile devra donc être à une distance donnée maximum pour pouvoir être écrit grâce à ce système de d'évaluation de l'énergie reçue. De plus on notera que cette distance est pratiquement indépendante de la température ambiante ce qui n'est pas le cas pour les solutions proposées dans l'art antérieur.

### BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 représente un schéma blocs d'un circuit transpondeur selon un mode de réalisation de l'invention;
- la figure 2 représente un schéma blocs de l'unité d'évaluation selon un mode de réalisation préféré de l'invention;
- la figure 3 représente un schéma plus détaillé d'un exemple de bloc de simulation d'une opération d'écriture;
- la figure 4 représente un schéma blocs de l'unité de surveillance de la tension d'alimentation selon un mode de réalisation préféré de l'invention;
- la figure 5a représente une première simulation avec interruption due à une alimentation interne insuffisante;
- la figure 5b représente une deuxième simulation sans interruption lorsque l'énergie reçue est suffisante:
- la figure 5c représente une troisième simulation avec interruption lorsque l'énergie reçue est insuffisante.

### DESCRIPTION DETAILLEE DE L'INVENTION

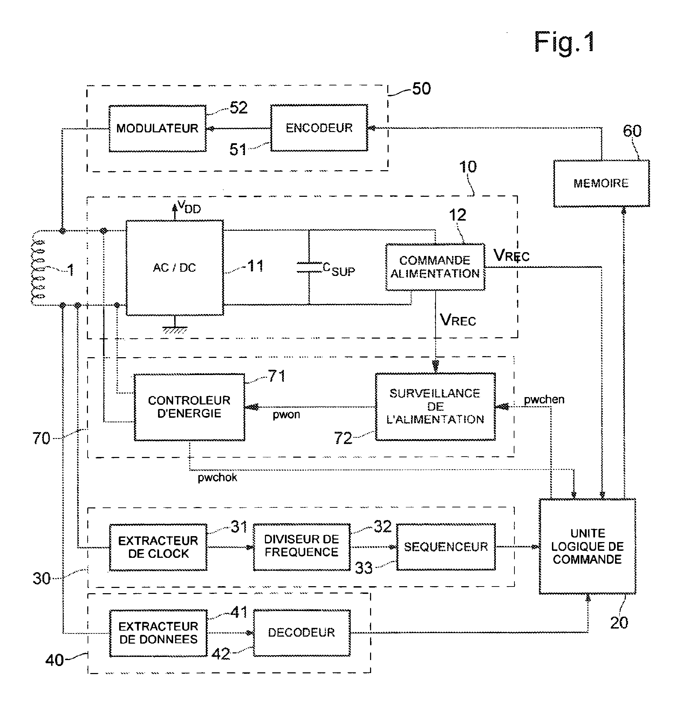

L'invention va maintenant être décrite en relation avec les figures 1 à 5c selon des modes de réalisation avantageux fournis à titre d'exemple.

La figure 1 représente un schéma blocs d'un circuit transpondeur comprenant de manière classique une antenne 1 permettant de recevoir les signaux émis par l'émetteur-récepteur d'une station de base, et permettant de renvoyer des signaux à cette station de base, non représenté. L'antenne 1 permet d'alimenter un bloc d'alimentation 10 du transpondeur constitué généralement par un convertisseur AC/DC 11, une capacité de charge Csup du bloc d'alimentation et des moyens de commande de l'alimentation 12 du transpondeur. Ce bloc d'alimentation 10 alimente notamment une unité logique de commande 20 qui traite les informations reçues et détermine l'état du transpondeur. Tout autre bloc d'alimentation permettant de récupérer l'énergie reçue du signal radiofréquence pour alimenter le circuit transpondeur est bien entendu envisageable,

L'antenne 1, qui reçoit les signaux émis par la station de base, est reliée à un bloc de synchronisation 30 du circuit transpondeur sur la station de base, comprenant par exemple des moyens d'extraction de signaux d'horloge 31, suivis de moyens diviseurs de fréquence 32, suivi d'un séquenceur 33. Les moyens d'extraction de signaux d'horloge 31 permettent de récupérer un signal d'horloge à la fréquence porteuse utilisée par la station de base. Les moyens diviseurs de fréquence 32 permettent d'abaisser à la fréquence de travail du circuit transpondeur, la fréquence du signal d'horloge extrait. Cette même antenne 1 est également reliée à un bloc de réception 40 permettant de recevoir 41 et de décoder 42 les commandes envoyées par la station de base. L'antenne 1 permet également d'émettre des signaux de réponse à la station de base, et pour cela l'antenne est aussi reliée à un bloc de modulation 50 constitué par un encodeur 51 suivi d'un modulateur 52.

Le circuit transpondeur comprend également une unité de mémorisation 60 de type non volatile destinée à contenir des informations propres, telles que son numéro d'identification et des informations externes reçues de la station de base.

L'unité logique de commande 20 du circuit transpondeur est connectée à tous les autres blocs afin de pouvoir commander chacun d'entre eux et gérer les informations stockées dans l'unité de mémorisation 60 suivant les commandes reçues.

Il ressort du problème posé que la seule énergie utilisable de manière fiable pour l'écriture dans l'unité de mémorisation 60 non-volatile, est l'énergie captée par l'antenne 1 en provenance du champ électromagnétique émis par la station de base, à condition que cette énergie soit en quantité suffisante au moment où l'on en a besoin. C'est donc cette énergie là qu'il convient d'évaluer. Toute autre évaluation d'énergie prenant en compte de l'énergie préalablement stockée n'aura pour effet que de fausser l'estimation quant à la réelle valeur de l'énergie disponible lorsque l'unité logique de commande 20 envoie une instruction d'écriture ou programmation dans l'unité de mémorisation 60.

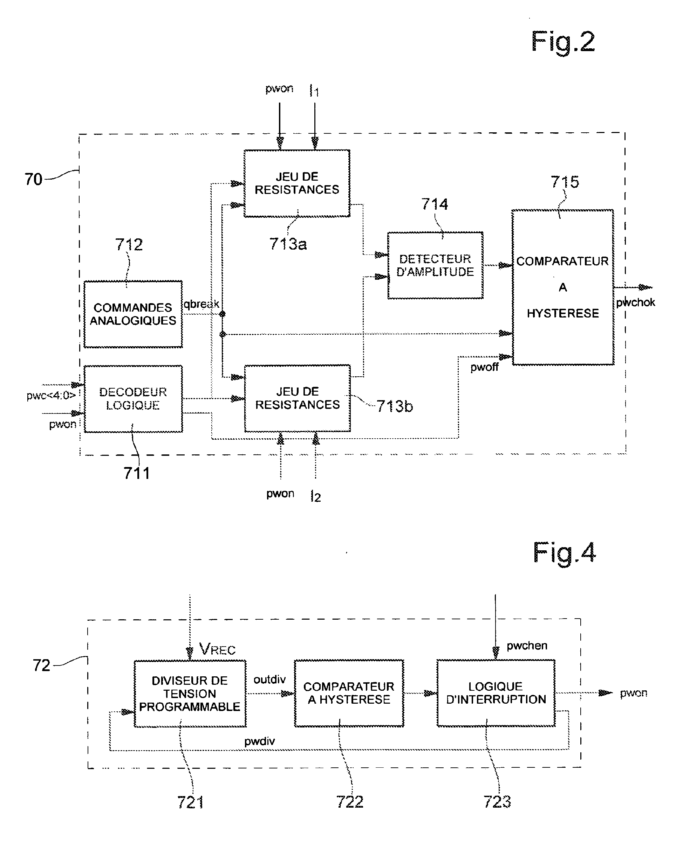

La solution adoptée consiste avantageusement à prévoir des moyens pour évaluer l'énergie disponible directement au niveau de l'antenne. Selon un mode de réalisation préféré qui sera détaillé en liaison avec les figures 2 et 4, il est prévu d'évaluer l'énergie disponible en tirant du courant électrique au niveau de l'antenne à travers une résistance programmable et de vérifier si l'amplitude de la tension aux bornes de cette résistance est au-dessus ou au-dessus d'un niveau prédéfini de tension, Le choix des valeurs de la résistance programmable se faisant pendant la phase du test du circuit transpondeur avant sa commercialisation, les valeurs à utiliser peuvent être mise en mémoire non-volatile, par exemple, dans le circuit lui-même.

De manière plus générale, le circuit transpondeur comprend donc en outre une unité d'autorisation d'une opération d'écriture 70 comprenant une unité d'évaluation 71 de l'énergie disponible, encore appelé contrôleur d'énergie, agencée directement au niveau de l'antenne. Cette unité d'évaluation 71 est de préférence activée uniquement sur commande, par le biais du signal pwon selon le mode de réalisation représenté avec unité de surveillance 72 ou directement par le signal pwchen, pour évaluer l'énergie à disposition captée par l'antenne 1 et fournit une réponse sous forme d'une information binaire pwchok indiquant si l'énergie à disposition est supérieure ou inférieure à un niveau d'énergie prédéterminée correspondant au niveau minimum d'énergie nécessaire pour effectuer une opération d'écriture correctement dans l'unité de mémorisation 60.

Selon le mode de réalisation avantageux représenté à la figure 1, l'unité d'autorisation 70 d'une opération d'écriture comprend en outre une unité de surveillance 72 de la tension d'alimentation du circuit transpondeur, qui contrôle la tension d'alimentation à disposition de manière à assurer au circuit transpondeur un fonctionnement correct pendant une période d'évaluation, ce dernier pouvant effectuer d'autres tâches en parallèle du contrôle de l'énergie à disposition.

Il est très avantageux de partager l'unité d'autorisation 70 d'une opération d'écriture en deux unités d'évaluation 71 et de surveillance 72 car, l'évaluation de l'évaluation de l'énergie à disposition par l'unité d'évaluation 71 se fait au détriment de l'énergie que peut utiliser le circuit transpondeur pour d'autres tâches. En effet le circuit transpondeur fonctionne en utilisant la source d'alimentation Vrec fournit par la commande d'alimentation 12, qui est régénérée par l'énergie reçue par l'antenne 1. Si l'énergie reçue est en abondance il n'y a pas de problème mais, si cette énergie n'est pas en quantité suffisante alors, pendant une période d'évaluation de l'énergie reçue, le niveau de tension d'alimentation Vrec risque de ne pas se régénérer suffisamment, au point d'entraîner un mauvais fonctionnement du circuit transpondeur, ce qu'il est préférable d'éviter. C'est dans ce but qu'intervient l'unité de surveillance 72 qui interrompt, par le biais du signal pwon, prématurément l'évaluation de l'énergie reçue en dépit de l'ordre reçu initialement. L'interruption de l'évaluation de l'énergie a deux conséquences. Premièrement, l'énergie qui était consommée pour évaluation devient disponible pour régénérer la source d'alimentation Vrec du circuit transpondeur ce qui permet un fonctionnement de ce dernier dans des conditions normales. Deuxièmement, le signal d'autorisation d'une opération d'écriture pwchok résultant de l'évaluation de l'énergie, est remis à "0", ce qui signifie une insuffisance d'énergie pour une telle opération d'écriture en mémoire 60. Naturellement dans ce cas-ci l'information est mémorisée de telle sorte que la régénération du niveau de tension d'alimentation Vrec ne modifie pas l'information comme quoi l'énergie est insuffisante. Pour réenclencher le mécanisme d'évaluation de l'énergie il faut recommencer un nouveau cycle complet avec la commande pwchen.

Naturellement dans le cas où le condensateur de filtrage Csup de l'alimentation est suffisamment grand, il est possible que l'énergie reçue par l'antenne soit insuffisante mais, que le niveau de l'alimentation Vrec reste correct tout au long de la période d'évaluation de l'énergie à disposition, ce qui n'entraîne pas d'interruption prématurée de la fonction d'évaluation de l'énergie reçue. Dans ce cas, l'unité d'évaluation pourra évaluer la valeur de l'énergie reçue par l'antenne, sans que cette évaluation soit faussée par un stockage préliminaire d'une certaine quantité d'énergie reçue préalablement.

Ceci présente l'avantage de par son fonctionnement de pouvoir réutiliser dans des circuits intégrés différents, cette unité d'évaluation 71 du fait que la mesure de l'énergie n'est pas entachée d'erreurs dues à un stockage préalable éventuel d'énergie. En outre cette unité s'adapte bien à la technologie des circuits intégrés car la solution utilisée fait abstraction des composants externes au circuit. Elle fait également abstraction de la valeur que peut avoir le condensateur de filtrage de l'alimentation. En outre, dans le mode de réalisation avantageux utilisant une unité de surveillance 72 de l'alimentation, l'unité d'autorisation 70 est également capable de prendre la décision d'interrompre une évaluation de l'énergie qui mettrait en danger le bon fonctionnement du circuit. On notera encore, que l'unité d'évaluation présente l'avantage d'homogénéiser la distance d'écriture de la mémoire et ainsi d'éliminer les disparités de pièce à pièce.

La figure 2 représente un schéma blocs de l'unité d'évaluation selon un mode de réalisation préféré de l'invention. L'unité d'évaluation 71 est avantageusement, selon l'exemple représenté, décomposée en six blocs, parmi lesquels un décodeur logique 711, un bloc de commandes analogiques 712, deux blocs 713a et 713b comprenant chacun un jeu de résistances, un détecteur d'amplitude 714 et en sortie un comparateur à hystérèse 715.

Le décodeur logique 711 transforme les consignes (pwc<4:0>) reçues en commandes directement compréhensibles par les blocs analogiques, à savoir en particulier les blocs 713a et 713b comprenant chacun un jeu de résistances ou une source de courant programmable. En effet ces consignes reçues par le décodeur logique 711 concernent les niveaux d'énergie à évaluer dont les valeurs ont été définies préalablement lors du test du circuit transpondeur et mémorisées dans le circuit pour que l'unité logique de commande du circuit puisse les appliquer en cours de fonctionnement.

Le bloc de commandes analogiques 712 fournit les courants de polarisation ainsi que des délais pour la mise en marche de la fonction recherchée.

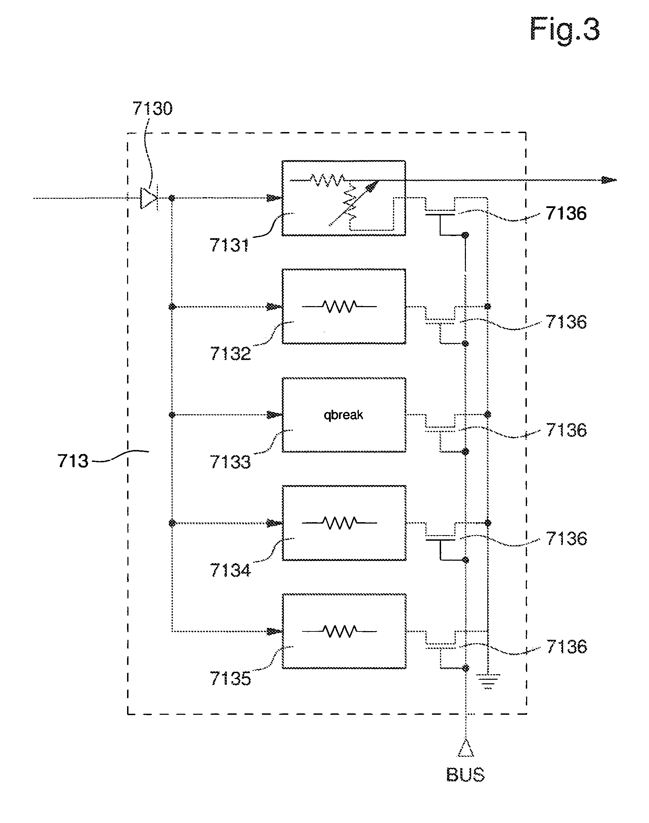

Les deux blocs 713a et 713b, choisis identiques dans leur structure, sont connectés chacun sur un des connecteurs de l'antenne, 11 et 12. Au sein d'un de ces blocs 713a, 713b qui sera décrit plus en détail ultérieurement en se referant à la Fig. 3, la tension reçue présente dans le bloc d'alimentation est d'abord redressée, ce qui permet d'apprécier la valeur de la tension qui pourra être récupérée par l'alimentation Vrec pendant une opération d'écriture. Un diviseur résistif permet d'adapter le niveau de la tension à la valeur de référence basée sur une tension bandgap. Ensuite l'énergie reçue est écoulée à travers un jeu de résistances, chacune des résistances pouvant être enclenchée ou non en fermant ou ouvrant un interrupteur correspondant, de manière à simuler différentes consommations dues à la mémoire à écrire. Le montage faisant appel aux deux blocs 713a et 713b est symétrique par rapport aux deux connecteurs I1, I2 et à la masse du système. Cette structure présente l'avantage de simuler parfaitement la consommation sur chaque alternance des ondes captées par l'antenne 1. Par conséquent, la tension de pic obtenue après le redresseur 7130 sera une image fidèle de la tension que l'on obtiendra au niveau de la tension redressée en fonction du niveau d'énergie ou de courant contrôlé. En effet le redresseur 7130 est dimensionné en rapport avec le redresseur interne permettant de récupérer l'énergie pour alimenter le transpondeur.

Le détecteur d'amplitude 714 comprend un redresseur à double alternance dont les deux entrées proviennent des diviseurs résistifs des blocs 713a et 713b, et un filtre de fréquence permettant de mémoriser l'amplitude maximum provenant des deux blocs précédents 713a et 713b. Cette fonction permet d'avoir l'image de la tension qui sera disponible pour le reste du circuit pendant que la mémoire est en train d'être écrite, i.e. lors d'une opération d'écriture. La valeur redressée et filtrée étant affectée d'une erreur due au seuil de détection du redresseur, l'opération suivante consiste à corriger cette erreur en rajoutant la valeur de la tension correspondant au seuil de tension introduit par le redresseur. La tension corrigée se retrouve en sortie du détecteur d'amplitude. Cette tension est de préférence filtrée une seconde fois ce qui permet d'atténuer encore les résidus de tension non filtrés par le premier étage.

En sortie, pour finir le comparateur à hystérèse 715 permet de savoir si le niveau de tension est inférieur ou supérieur à un niveau de référence à chaque instant. Ce niveau de référence correspond au seuil que nous avons apprécié comme étant le niveau d'énergie minimum pour lequel une opération d'écriture de la mémoire se fait en toute fiabilité.

La figure 3 représente de manière plus détaillée un exemple d'un des blocs de simulation d'une opération d'écriture, désignés par la référence 713a ou 713b à la figure 2. Les composantes de ce bloc 713 sont réparties dans le schéma en cinq rangées, chaque rangée étant pourvue d'un interrupteur 7136 qui permet d'enclencher ou non la composante associée. En partant du haut du schéma, on trouve dans la première rangée un diviseur de tension 7131 qui est toujours enclenché quand on désire effectuer une évaluation de l'énergie. Ce diviseur résistif 7131 représente le niveau minimum d'énergie que l'on veut contrôler, c'est-à-dire, si l'interrupteur 7136 associé à ce diviseur résistif 7131 est fermé, mais les interrupteurs associés aux rangées suivantes sont ouverts, la tension à la sortie du bloc 713 correspondra à une première tension minimale. Ce diviseur résistif 7131 peut en outre être programmable par exemple par masque métal. Les deuxième, quatrième et cinquième rangées comprennent chacune une résistance 7132, 7134 et 7135 qui peut être enclenchée en fermant un interrupteur 7136 correspondant. Tous ces interrupteurs 7136 sont d'ailleurs commandés électroniquement, les commandes provenant d'un BUS représenté dans la fig. 3. Les résistances 7132, 7134, 7135 permettent de contrôler des niveaux supérieurs d'énergie: Si un interrupteur 7136 associé à une des résistances 7132, 7134, 7135 est fermé, ceci augmentera la quantité d'énergie écoulée à travers l'unité 713 représentée dans la Fig. 3. On peut donc simuler différents niveaux d'énergie en fonction de l'énergie considérée comme nécessaire. Certaines configurations peuvent d'ailleurs être programmables par masque métal. Quant à la troisième rangée 7133, elle permet de casser le facteur de qualité de l'antenne par la commande qbreak. L'intérêt de cette fonction est de pouvoir rapidement évacuer l'énergie accumulée dans l'antenne et d'effectuer donc une évaluation de cette énergie quand elle s'accumule dans l'antenne une fois que la période d'évacuation rapide est terminée. Cette option est également programmable par masque métal.

Cette évaluation de l'énergie reçue se fait ainsi en écoulant au travers d'un jeu de résistances une quantité d'énergie semblable à ce que ferait une mémoire au cours d'une opération d'écriture. De cette manière ces blocs 713 minimisent les adaptations nécessaires à leur utilisation dans différents circuits intégrés en raison des simples commandes qui permettent d'évaluer une vaste gamme d'énergie, en surplus des options fixées par masque qui sont possibles.

La figure 4 représente un schéma blocs de l'unité de surveillance de la tension d'alimentation selon un mode de réalisation préféré de l'invention. L'unité de surveillance 72 de la tension d'alimentation est avantageusement partagée en trois blocs, parmi lesquels, un diviseur de tension programmable 721, un comparateur à hystérèse 722 et une unité logique d'interruption 723 qui traite l'information, c'est-à-dire d'une part l'ordre de mise en marche de l'unité de surveillance et d'autre part la valeur de la tension d'alimentation par rapport à une référence. Ainsi l'unité logique d'interruption peut prendre la décision d'interrompre une évaluation en cours ou même de ne pas entreprendre d'évaluation de l'énergie, s'il y a un risque d'entraîner une pénurie d'énergie pour le bon fonctionnement du reste du circuit transpondeur.

Le diviseur de tension 721 permet de ramener au niveau voulu la tension d'alimentation Vrec pour être comparée à une tension de référence. Ce diviseur comprend principalement un transistor commandé par un signal pwdir qui permet de déconnecter définitivement le diviseur de la tension de référence jusqu'à la fin d'une opération. Le signal de commande pwdir provient de l'unité logique d'interruption 723 qui sera détaillée ci-après. A ce diviseur 721 est associé un filtre passe-bas réalisé par un autre transistor connecté sur le signal de sortie outdiv dont la constante de temps permet au comparateur à hystérèse 722 de se mettre en condition de travailler après mise en marche sans générer d'impulsion transitoire qui pourrait compromettre le bon fonctionnement de la fonction recherchée. En effet, l'état transitoire pourrait être interprété comme un faible niveau de tension par l'unité logique 723 et delà pourrait entraîner une interruption injustifiée du contrôle de l'énergie reçue, pour avoir diagnostiqué à tort que la tension d'alimentation Vrec était insuffisante.

Le comparateur à hystérèse 722 présente de préférence une programmation en masque métal permettant de choisir le temps de réaction en cas de nécessité d'interrompre l'évaluation de l'énergie reçue. En effet de la rapidité du temps de réaction dépend le niveau de dégradation atteint par le niveau de tension de l'alimentation Vrec. On prendra en compte avantageusement, une marge de sécurité en fonction des pires cas possibles. Ce comparateur 722 est dans la chaîne de traitement de l'information qui consiste à savoir si l'on peut effectuer une opération d'évaluation de l'énergie reçue sans mettre en danger le bon fonctionnement du circuit transpondeur. En effet, comme déjà mentionné précédemment, l'évaluation de l'énergie reçue peut empêcher la tension d'alimentation Vrec du circuit de se régénérer correctement, en particulier dans le cas d'une pénurie d'énergie. Il faut donc pouvoir interrompre une telle évaluation pour laisser à disposition le peu d'énergie reçue afin de ne pas empêcher la bonne marche de l'application en cours.

L'unité logique 723 permet d'une part d'enclencher sur demande provenant du signal pwchen une opération d'évaluation de l'énergie via le signal pwon et peut, d'autre part, l'interrompre si un problème a été détecté avec le niveau de la tension d'alimentation Vrec. Il s'agit donc du dernier étage de traitement de l'information relative à la valeur de la tension d'alimentation Vrec nécessaire à un fonctionnement optimisé du circuit total.

Les différentes simulations qui vont suivre ont été réalisées pour un circuit transpondeur selon l'invention. Ces différentes simulations comprennent la tension à l'un des connecteurs de l'antenne V(I1), la tension d'alimentation Vrec fournit par le redresseur, le signal pwchok qui est l'indicateur du niveau de l'énergie reçue dont l'évaluation est commandée par le signal pwchen, et le signal V(pwon) indicateur de la commande réelle d'une opération d'évaluation mais surtout de l'interruption de cette commande. On notera que dans cette version de simulation les possibilités de programmation supplémentaires n'ont pas été utilisées,

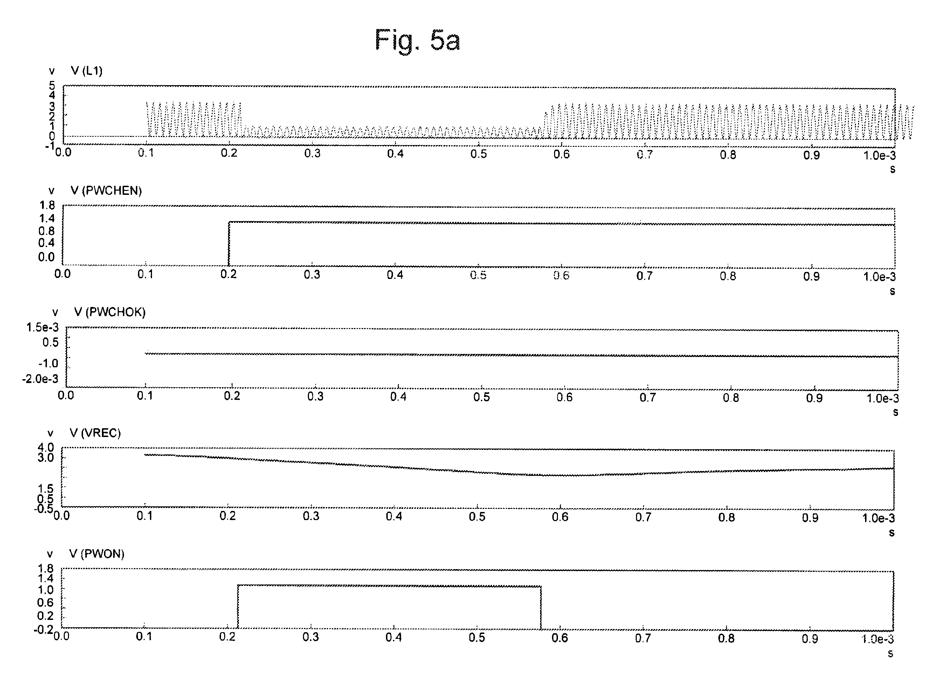

La figure 5a représente une première simulation avec interruption due à une alimentation interne insuffisante. Cette première simulation montre qu'à la demande d'une évaluation de l'énergie, requise par le niveau haut du signal pwchen, l'unité d'autorisation peut commencer à effectuer la tâche demandée. Dans le même temps, le signal interne pwon commandée par l'unité de surveillance passe à "1", niveau haut, et la tension sur l'antenne V(I1) diminue. En conséquence de quoi, le niveau de l'alimentation Vrec ne se régénère plus. Quand la tension d'alimentation approche une zone de sécurité minimale prédéterminée alors l'unité de surveillance décide d'interrompre l'évaluation de l'énergie par l'unité d'évaluation puisque celle-ci est visiblement insuffisante, sachant que continuer cette évaluation mettrait en danger le bon fonctionnement de l'ensemble du circuit transpondeur. L'unité de surveillance remet donc à "0" le signal de commande interne pwon malgré la commande générale pwchen qui est générée par l'unité logique de commande du circuit, unité externe à l'unité d'autorisation. De ce fait le niveau de tension sur l'antenne V(I1) augmente à nouveau et la tension d'alimentation Vrec disponible se régénère correctement, évitant ainsi un mauvais fonctionnement du circuit. On remarque que selon cette première simulation, le signal pwchok n'est jamais passé à "1", ce qui indique pour l'unité logique de commande qui exploite cette information que le niveau d'énergie est insuffisant.

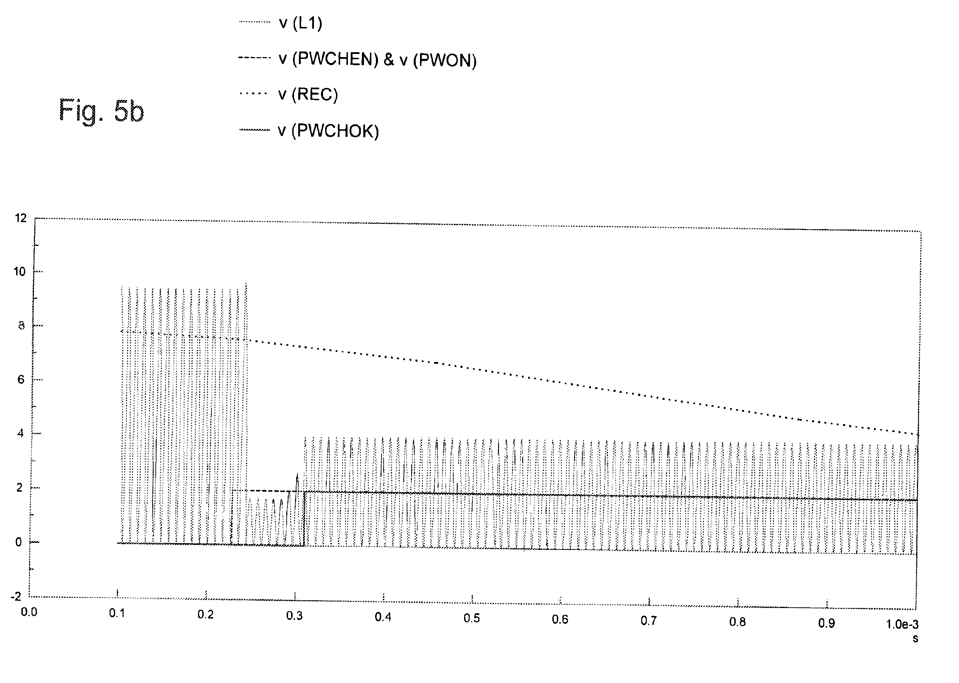

La figure 5b représente une deuxième simulation sans interruption lorsque l'énergie reçue est suffisante. La deuxième simulation montre le cas d'une évaluation d'énergie quand celle-ci est suffisante. A l'enclenchement de l'ordre d'évaluation de l'énergie, par le biais du signal pwchen, le niveau de tension V(I1) sur l'antenne s'écroule, ce qui correspond à la période pendant laquelle le facteur de qualité de l'antenne est cassé, la vidant de son énergie accumulée. Après cette période le niveau de tension V(I1) sur l'antenne augmente pour se stabiliser. Au bout d'un certain temps le signal pwchok passe à "1" indiquant au circuit que le niveau d'énergie est suffisant pour permettre une opération d'écriture fiable de la mémoire.

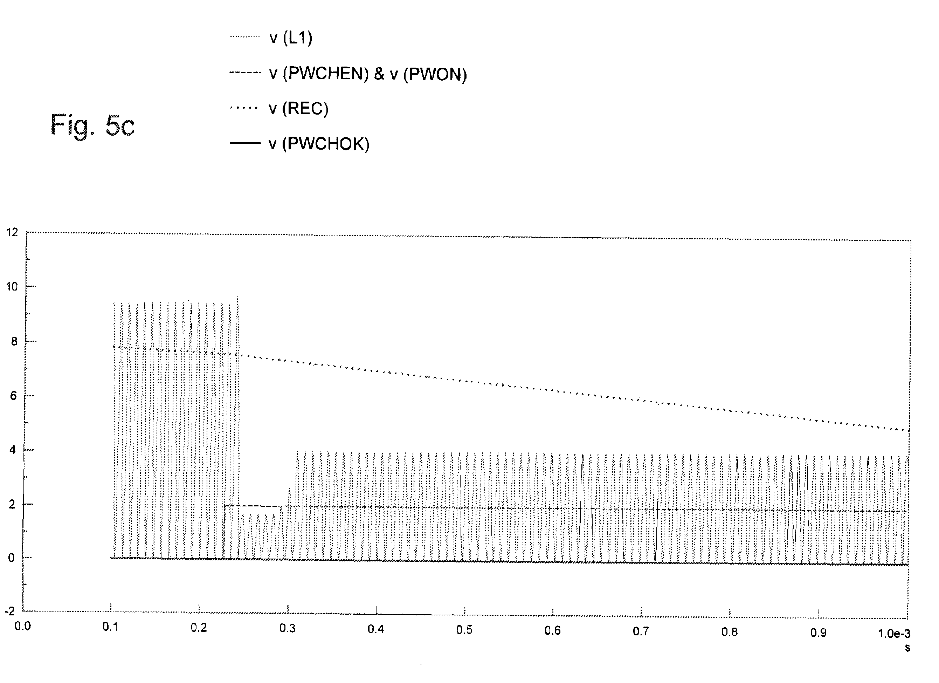

La figure 5c représente une troisième simulation avec interruption lorsque l'énergie reçue est insuffisante. La troisième simulation est similaire au cas précédent mais l'énergie n'est pas suffisante sans pour autant que la tension sur l'alimentation compromette le bon fonctionnement du circuit. On retrouve bien un chronogramme semblable à celui de la simulation précédente à la différence que cette fois le signal pwchok reste collé à "0" indiquant au circuit que le niveau d'énergie est insuffisant pour assurer une opération d'écriture fiable de la mémoire.

On notera enfin, qu'à titre de variante, il est possible d'utiliser à la place des jeux de résistances 713a, 713b représentés à la figure 3, une source de courant programmable que l'on générerait à partir d'un miroir de courant réalisé dans la même technologie que le reste du circuit, dans lequel le transistor de sortie remplace les résistances et le transistor de commande du miroir reçoit un courant calibré issu de la référence bandgap, La programmation du courant peut se faire soit au niveau du transistor de commande soit au niveau du transistor de sortie.

## Revendications

1. Circuit transpondeur comprenant une antenne (1) pour recevoir des signaux radiofréquences et une unité d'extraction (30) pour en extraire au moins une partie de l'énergie nécessaire au circuit transpondeur, une unité mémoire non-volatile (60), une unité logique de commande (20) du circuit qui active une unité d'évaluation (71) de l'énergie reçue lors de la réception d'une opération d'écriture par les signaux radiofréquences, **caractérisé en ce que** l'unité d'évaluation est agencée directement au niveau de l'antenne de manière à fournir à l'unité logique de commande un signal (pwchok) représentatif du statut de l'énergie disponible au niveau de l'antenne indiquant si l'énergie disponible est supérieure à un niveau minimum pour assurer une opération d'écriture correcte ou si l'énergie disponible est inférieure au niveau minimum pour assurer une opération d'écriture correcte, l'unité logique de commande étant agencée pour effectuer, ou respectivement ne pas effectuer, ladite opération d'écriture, ladite unité d'évaluation comprenant un diviseur résistif (713a, 713b) incluant un jeu de résistances ou une source de courants programmable et un moyen de redressement (7130) sur chaque connecteur de l'antenne pour simuler d'une part une opération d'écriture de la mémoire et d'autre part l'énergie récupérable par l'alimentation.

2. Circuit transpondeur selon la revendication 1, **caractérisé en ce qu'**il comprend en outre une unité de surveillance (72) de la tension d'alimentation du circuit transpondeur pour interrompre l'unité d'évaluation lorsque la tension d'alimentation du circuit transpondeur est inférieure à un seuil prédéterminé de fonctionnement du circuit transpondeur.

3. Circuit transpondeur selon la revendication 2, **caractérisé en ce que** l'unité de surveillance comprend un diviseur de tension (721) qui permet de ramener la tension d'alimentation à un niveau choisi pour être comparable à une tension de référence, un comparateur à hystérèse (722) permettant de choisir le temps de réaction pour interrompre l'évaluation de l'énergie reçue en cours et une unité logique d'interruption (723) permettant d'une part d'enclencher sur demande l'unité d'évaluation et d'autre part de l'interrompre.

4. Circuit transpondeur selon l'une quelconque des revendications précédentes, **caractérisé en ce que** l'unité d'évaluation comprend en outre un décodeur logique (711) pour connaître le niveau d'énergie à évaluer, des blocs de commandes analogiques (712) pour la mise en oeuvre de la fonction recherchée, un détecteur d'amplitude (714) permet d'avoir l'image de la tension qui sera disponible pour le reste du circuit pendant l'opération d'écriture et un comparateur à hystérèse (715) pour comparer le niveau de tension disponible avec le niveau de tension minimum choisi pour laquelle l'opération d'écriture dans la mémoire peut se faire correctement.

5. Circuit transpondeur selon l'une quelconque des revendications précédentes, **caractérisé en ce que** le niveau minimum pour assurer une opération d'écriture correcte est défini par une mesure préalable lors de la fabrication du circuit de la véritable valeur de consommation d'énergie par la mémoire pour une opération d'écriture, cette valeur étant stockée sous forme dudit niveau minimum dans l'unité logique de commande du circuit transpondeur.

6. Circuit transpondeur selon l'une quelconque des revendications précédentes, **caractérisé en** il est prévu plusieurs niveaux d'énergie d'évaluation suivant le type d'opération écriture souhaitée.

## Claims

1. Transponder circuit including an antenna (1) for receiving radio frequency signals and an extraction unit (30) for extracting therefrom at least a part of the energy necessary for the transponder circuit, a non volatile memory unit (60), a control logic unit (20) for the circuit that activates a received energy evaluation unit (71) when a write operation is received via the radio frequency signals, **characterized in that** the evaluation unit is arranged directly at the antenna so as to provide the control logic unit with a signal (pwchok) representative of the status of the energy available in the antenna indicating whether the available energy is greater than a minimum level for ensuring a proper write operation or whether the available energy is less than the minimum level for ensuring a proper write operation, the control logic unit being arranged for performing, or respectively not performing, said write operation, said evaluation unit including a resistive divider (713a, 713b) including a set of resistors or a programmable current source and rectifier means (7130) on each connector of the antenna for simulating on one hand a write operation in the memory and on the other hand the energy that can be recuperated by the power supply.

2. Transponder circuit according to claim 1, **characterized in that** it further includes a transponder circuit supply voltage monitoring unit (72) for interrupting the evaluation unit when the supply voltage of the transponder circuit is less than a predetermined transponder circuit operating threshold.

3. Transponder circuit according to claim 2, **characterized in that** the monitoring unit includes a voltage divider (721) which returns the supply voltage to a level chosen to be comparable to a reference voltage, a hysteresis comparator (722) for selecting the reaction time for interrupting the received energy evaluation in progress and an interruption logic unit (723) for on one hand switching on the evaluation unit upon request and on the other hand for interrupting said evaluation unit.

4. Transponder according to any of the preceding claims, **characterized in that** the evaluation unit further includes a logic decoder (711) for finding out the level of energy to be evaluated, analogue control units (712) for implementing the desired function, an amplitude detector (714) providing the image of the voltage that will be available for the rest of the circuit during the write operation and a hysteresis comparator (715) for comparing the available voltage level to the minimum selected voltage level for which the write operation can be properly performed in the memory.

5. Transponder circuit according to any of the preceding claims, **characterized in that** the minimum level for ensuring a proper write operation is defined by a prior measurement, during manufacture of the circuit, of the true value of the energy consumed by the memory for a write operation, said value being stored in the form of said minimum level in the control logic unit of the transponder circuit.

6. Transponder circuit according to any of the preceding claims, **characterized in that** several energy evaluation levels are provided according to the type of write operation desired.

## Patentansprüche

1. Transponderschaltung, mit einer Antenne (1), um Funkfrequenzsignale zu empfangen, einer Extraktionseinheit (30), um daraus wenigstens einen Teil der Energie zu extrahieren, die für die Transponderschaltung notwendig ist, einer nichtflüchtigen Speichereinheit (60), und einer Steuerlogikeinheit (20) für die Schaltung, die eine Bewertungseinheit (71) für die Energie aktiviert, die bei Empfang einer Schreiboperation durch die Funkfrequenzsignale empfangen wird, **dadurch gekennzeichnet, dass** die Bewertungseinheit direkt auf Höhe der Antenne angeordnet ist, derart, dass sie an die Steuerlogikeinheit ein Signal (pwchok) liefert, das den Status der auf Seiten der Antenne verfügbaren Energie repräsentiert und angibt, ob die verfügbare Energie größer als ein minimaler Pegel ist, bei dem eine korrekte Schreiboperation gewährleistet ist, oder ob die verfügbare Energie niedriger als der minimale Pegel ist, bei dem eine korrekte Schreiboperation gewährleistet ist, wobei die Steuerlogikeinheit dazu ausgelegt ist, die Schreib-operation auszuführen bzw. nicht auszuführen, wobei die Bewertungseinheit einen resistiven Teiler (713a, 713b), der einen Satz von Widerständen oder eine programmierbare Quelle von Strömen enthält, und ein Gleichrichtermittel (7130) an jedem Verbinder der Antenne umfasst, um einerseits eine Schreiboperation des Speichers und andererseits die von der Versorgung wiedergewinnbare Energie zu simulieren.

2. Transponderschaltung nach Anspruch 1, **dadurch gekennzeichnet, dass** sie außerdem eine Überwachungseinheit (72) für die Versorgungsspannung der Transponderschaltung umfasst, um die Bewertungseinheit zu unterbrechen, wenn die Versorgungsspannung der Transponderschaltung niedriger als ein vorgegebener Schwellenwert für die Funktion der Transponderschaltung ist.

3. Transponderschaltung nach Anspruch 2, **dadurch gekennzeichnet, dass** die Überwachungseinheit umfasst: einen Spannungsteiler (721), der ermöglicht, die Versorgungsspannung auf einen Pegel zurückzustellen, der gewählt wird, um mit einer Referenzspannung vergleichbar zu sein, einen Komparator (722) mit Hysterese, der ermöglicht, die Reaktionszeit für die Unterbrechung der Bewertung der momentan empfangenen Energie zu wählen, und eine Unterbrechungslogikeinheit (723), die einerseits das Starten der Bewertungseinheit auf Anforderung und andererseits ihre Unterbrechung ermöglicht.

4. Transponderschaltung nach einem der vorhergehenden Ansprüche, **dadurch gekennzeichnet, dass** die Bewertungseinheit außerdem umfasst: einen Logikdecodierer (711), um das Niveau der zu bewertenden Energie zu kennen, analoge Steuerblöcke (712), um die gesuchte Funktion auszuführen, einen Amplitudendetektor (714), der ermöglicht, das Bild der Spannung zu erhalten, die für die restliche Schaltung während der Schreiboperation verfügbar ist, und einen Komparator (715) mit Hysterese, um den Pegel der verfügbaren Spannung mit dem gewählten minimalen Spannungspegel, bei dem die Schreiboperation im Speicher korrekt erfolgen kann, zu vergleichen.

5. Transponderschaltung nach einem der vorhergehenden Ansprüche, **dadurch gekennzeichnet, dass** der minimale Pegel für die Gewährleistung der korrekten Schreiboperation durch eine vorherige Messung bei der Herstellung der Schaltung des tatsächlichen Wertes des Verbrauchs von Energie durch den Speicher für eine Schreiboperation definiert ist, wobei dieser Wert in Form des minimalen Pegels in der Steuerlogikeinheit der Transponderschaltung gespeichert ist.

6. Transponderschaltung nach einem der vorhergehenden Ansprüche, **dadurch gekennzeichnet, dass** mehrere Bewertungsenergiepegel entsprechend dem gewünschten Typ der Schreiboperation vorgesehen sind.
